# EUROPÄISCHE PATENTSCHRIFT

(11) **EP 1 925 573 B1**
(45) Veröffentlichungstag und Bekanntmachung des Hinweises auf die Patenterteilung: **18.03.2009**
(21) Anmeldenummer: 07022729.3
(22) Anmeldetag: 23.11.2007
(51) Int. Cl.: B65G 1/137, B65B 61/26

(54) **Verfahren zum Kommissionieren von Waren**
Method for picking goods
Procédé destiné au commissionnement de marchandises

(30) Priorität: 24.11.2006 DE 102006055939
(43) Veröffentlichungstag der Anmeldung: 28.05.2008
(73) Patentinhaber: Flooring Technologies Ltd., Portico Building Marina Street Pieta MSD 08 (MT)
(72) Erfinder:
(74) Vertreter: Rehmann, Thorsten

(56) Entgegenhaltungen:
- EP-A- 1 798 150
- DE-A1-5102005 036 33

## Beschreibung

Die Erfindung betrifft ein Verfahren zum Kommissionieren von Waren. Die Bereitstellung der Waren erfolgt auf einen kundenspezifischen Auftrag hin.

Als Waren kommen beispielsweise Holzwerkstoff-Paneele, insbesondere Fußbodenpaneele, in Frage. Üblicherweise werden solche Paneele in offene, kundenspezifische Kartons eingelegt, in den Karton wird anschließend ein Einleger, der z. B. eine Verlegeanleitung und regelmäßig auch produkt- und kundenspezifische Daten bzw. auch ein kundenspezifisches Layout aufweisen kann, eingelegt, der Karton wird dann mit Produktionsdaten etikettiert und anschließend mit einer Schrumpffolie luftdicht versiegelt. Die Kartons werden anschließend auf einen spezifischen Kundenauftrag abgestimmt, auf Paletten gestapelt, gesichert und anschließend ins Lager transportiert.

Diese Einzelprozesse erfolgen alle in sogenannten vollautomatischen Fußbodenlinien. Die Entwicklung der letzten Jahre weist im Grunde genommen bei allen Waren eine eindeutige, stetige Zunahme des Sortiments auf. Bei Fußbodenpaneelen dominieren die unterschiedlichen Dekore, die diversen Beschichtungen mit unterschiedlicher Verschleißfestigkeit und Produkte mit zusätzlichen Applikationen in zunehmender Vielfalt. Ein weiterer Faktor der Vielfalt sind Verpackungen. Heutzutage ist es marktüblich, auf den Kunden und das Produkte abgestimmte Verpackungen zu verwenden. Der Verpackungskarton nimmt dabei eine herausragende Stellung ein. Sein Anteil beträgt bis zu 40 % an der Vielfalt eines Sortiments. Daneben erfordert die Kartonvielfalt eine weiter steigende Lagerkapazität mit aufwändiger Logistik zu den Fußbodenlinien im kontinuierlich laufenden Schichtbetrieb.

Die DE 10 2005 036 335 A1 offenbart ein Verfahren zum Verpacken von Paneelen mit einer Folie. Um die Herstellung und Verpackung der Paneele verbessert realisieren zu können, wird vorgeschlagen, die Paneele mit einer Folie zu verpacken und vor oder nach dem Verpacken die Folie zu bedrucken.

Hiervon ausgehend liegt der Erfindung die Aufgabe zugrunde, ein Verfahren zum Kommissionieren von Waren, also zur Bereitstellung der Waren in Folge eines spezifischen Kundenauftrages, anzugeben, mit dem die Lagerlogistik und Lagerhaltung vereinfacht werden kann.

Zur Problemlösung zeichnet sich das Verfahren zum Kommissionieren von Waren durch folgende Schritte aus:
- Einlegen einer definierten Anzahl identischer Produkte in neutrale Behälter, insbesondere gefaltete Kartons,
- Sammeln der neutralen Behälter zu jeweils einem Gebinde,
- Einlagern einer Mehrzahl von Gebinden in einem Lager,
- Zusammenstellen der Waren in Folge eines spezifischen Auftrages durch Zusammenführung einer Mehrzahl mit den Produkten befüllter neutraler Behälter aus mindestens einem Gebinde zu einer Kommission,
- Beschriften und/oder Bedrucken jedes neutralen Behälters mit zu dem Auftrag gehörigen Daten, indem jeder Behälter mittels einer mechanischen Transporteinrichtung, insbesondere einem Förderband, an mindestens einer Druckvorrichtung vorbeigeführt wird und
- über mindestens ein Digitaldruckwerk der Druckvorrichtung mindestens eine Seite des Behälters beschriftet und/oder bedruckt wird, wobei
- jeder Behälter vor dem Beschriften und/oder Bedrucken in eine definierte Form gebracht wird, in dem bezogen auf die Transportrichtung vor und hinter dem mindestens einem Druckkopf beidseitig zu der Transporteinrichtung mechanische Mittel, vorzugsweise Rollen oder Walzen, angeordnet sind, die auf die Seitenwände des Behälters einwirken und mindestens die eine zu bedruckende Seitenwand im wesentlichen in einer vertikalen Ebene ausrichten.

Insbesondere ein Verfahren zum Kommissionieren von tafelförmigen Holzwerkstoffplatten, vorzugsweise Fußbodenpaneele, zeichnet sich durch die folgenden erfindungsgemäßen Schritte aus:
- Sammeln einer Vielzahl identischer Holzwerkstoffplatten zu mindestens einem Gebinde,
- Einlagern der Gebinde in einem Lager,
- Zusammenstellen der Waren in Folge eines spezifischen Auftrags durch Bereitstellen einer definierten Anzahl von Gebinden,
- Beschriften und/oder Bedrucken individueller Kartonzuschnitte mit für den Auftrag spezifischen Daten,
- Falten der Kartonzuschnitte zu einer Verpackung,
- Einlegen einer definierten Anzahl von aus den Gebinden entnommenen Holzwerkstoffplatten in die Verpackung, und
- luftdichtes Versiegeln jeder einzelnen Verpackung mittels Folie.

Durch diese Verfahren erfolgt die Individualisierung der Waren für einen spezifischen Kundenauftrag nicht wie bisher üblich vor dem Einlagern, sondern erst nachdem der Kundenauftrag vorliegt. Die Lagerhaltung wird dadurch wesentlich vereinfacht, weil keine individualisierten Einheiten unabhängig von der aktuellen Nachfrage gelagert werden müssen. Bei dem erfindungsgemäßen Verfahren, bei dem neutrale (weiße) Kartons eingelagert werden, wird vorzugsweise eine Vielzahl von Gebinden eingelagert, die aus unterschiedlichen Produkten gebildet wurden, wobei aber jedes einzelne Gebinde identische Produkte umfasst.

Durch diese Fortbildung kann das Lager mit dem gesamten Sortiment des Herstellers befüllt werden und Kundenaufträge aus dem gesamten Sortiment zusammengestellt und individualisiert werden.

Erfindungsgemäß soll unter dem Begriff Bedrucken das Erzeugen eines kundenspezifischen Layouts verstanden werden, beispielsweise Logos oder Schriftzüge. Unter dem Begriff Beschriften soll erfindungsgemäß eine Produktspezifikation verstanden werden, die beispielsweise in Form eines Barcodes ausgeführt sein kann und produktionsrelevante und produktspezifische Daten beinhalten kann. Zusätzlich zu einem Barcode kann die Beschriftung auch Länge, Breite, Dicke, Fläche, Abriebklasse, Dekor, Struktur und Trittschallapplikationen umfassen.

Die Behälter können nach dem Einlegen der Produkte und vor dem Einlagern verschlossen werden.

Wenn einseitig offene Behälter verwendet werden, wird vorzugsweise jedes aus einer Mehrzahl von Behältern gebildete Gebinde mittels einer Folie vor dem Lagern insbesondere luftdicht versiegelt.

Vorzugsweise wird jeder Behälter nach dem Bedrucken und/oder Beschriften mittels einer Folie insbesondere luftdicht versiegelt.

Insbesondere vorteilhaft ist es, wenn die Behälter an sich gegenüberliegenden Seitenwänden beschriftet werden, und weiter vorteilhaft ist es, wenn die Behälter nach der Druckvorrichtung, bezogen auf die Transportrichtung um 90° gedreht werden und weiterhin mindestens eine zu der bereits bedruckten Seitenwand rechtwinklig stehende Stirnwand beschriftet wird. Durch diese Ausgestaltung können ansprechende Verpackungsbehälter individualisiert werden.

Vorzugsweise wird als Druckvorrichtung mindestens ein Tintenstrahl- oder Laserdruckkopf verwendet.

Als Transportvorrichtung kann ein Vakuum-Förderband eingesetzt werden. Ein Vakuum-Förderband gewährleistet in besonderer Weise, dass der Transport der Behälter mit konstanter Geschwindigkeit und lagegenau erfolgt.

Es kann vorgesehen sein, dass eine Vielzahl individualisierter Behälter zu einer Verkaufseinheit zusammengefasst wird.

Die Produkte sind vorzugsweise Paneele aus Holzwerkstoff,

Mit Hilfe einer Zeichnung sollen Ausführungsbeispiele der Erfindung nachfolgend näher erläutert werden. Es zeigt:
- Figur 1: eine schematische Darstellung der Druckvorrichtung
- Figur 2: einen bedruckten Verpackungskarton für Holzwerkstoffpaneele
- Figur 3: die schematische Darstellung der Lagerlogistik nach dem Stand der Technik
- Figur 4: die schematische Darstellung der erfindungsgemäßen Lagerlogistik.

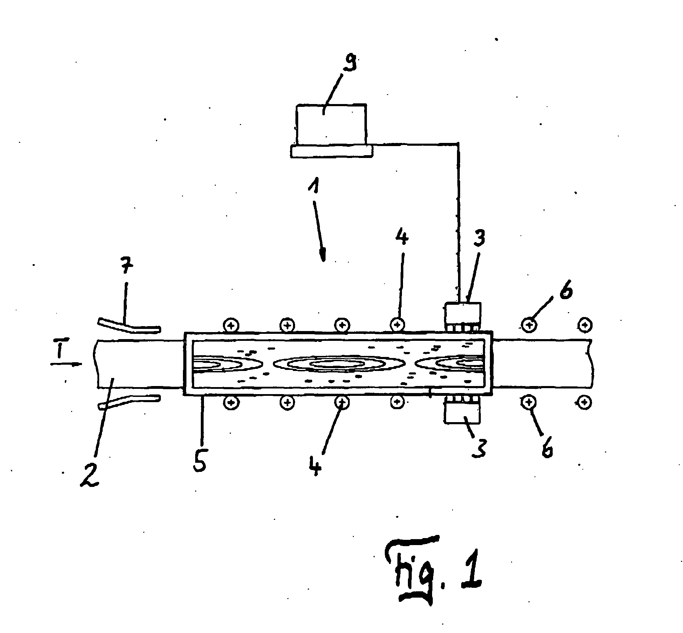

Figur 1 zeigt eine schematische Darstellung der Druckvorrichtung 1, die im wesentlichen aus einer Vorschubeinheit 2 sowie den auf beiden Seiten der Transporteinrichtung 2 angeordneten Digitaldruckwerken 3 und vor und hinter der Druckvorrichtung 1 beidseitig angeordneten Andruckrollen bzw. Andruckwalzen 4, 6 besteht. Soll ein entsprechender Verpackungskarton 5, der mit Holzwerkstoffpaneelen 8 bestückt ist, bedruck werden, so befördert die Transporteinrichtung 2, die ein Vakuum-Förderband ist, den Verpackungskarton 5 in Transportrichtung T an den Digitaldruckwerken 3 vorbei. Im Inkjet-Verfahren wird der Verpackungskarton 5 dann bedruckt. Vor der Anordnung der Digitaldruckwerke 3 und Andruckrollen bzw. Andruckwalzen 4, 6 befinden sich jeweils links und rechts der Transporteinrichtung 2 Einlaufschienen 7, die den Verpackungskarton 5 auf der Transporteinrichtung 2 entsprechend ausrichten.

Über die Andruckrollen bzw. Andruckwalzen 4, 6 wird die produktionsbedingte bauchige Form des Verpackungskartons 5 geglättet und die Seitenwände 23 in einer vertikalen Ebene ausgerichtet, damit das Digitaldruckwerk 3, beispielsweise ein Tintenstrahl- oder Laserdruckkopf, immer den selben Abstand zu der bedruckenden Fläche aufweist, wodurch gewährleistet wird, dass ein qualitativ hochwertiger Aufdruck erfolgt.

Die hinter dem Digitaldruckwerk 3 angeordneten Andruckrollen bzw. Andruckwalzen 6 zentrieren den Verpackungskarton 5 auch, nachdem die Seitenwände 23 bereits teilweise bedruckt werden. Vorzugsweise sind beidseitig des Verpackungskartons 5 Digitaldruckwerke 3 angeordnet, um beide Seitenwände 23 zu bedrucken. Dadurch wird die Effektivität der Anlage gesteigert. Wenn auch die Stirnseiten 24 der Verpackungskartons 5 bedruckt werden sollen, wird der Verpackungskarton 5 bezogen auf die Transportrichtung T um 90° gedreht und dann durch eine entsprechend ausgestaltete zweite Druckvorrichtung geführt.

Alternativ oder kumulativ zu den Andruckrollen bzw. Andruckwalzen 4, 6 können Gleitschienen vorgesehen sein, die das Aufrichten der Seitenwände 23 der Verpackungskartons 5 bewirken. Gleitschienen haben den Vorteil, dass sie im Grunde genommen die Führung der Seitenwände 23 über eine unbegrenzte Länge übernehmen können. Zur Ansteuerung des Digitaldruckwerkes 3 ist ein Computer 9 vorgesehen, der die für das Bedrucken und/oder Beschriften der Verpackungskartons 5 notwendigen Daten zur Verfügung stellt. Wird für das Bedrucken/Beschriften ein Laserdruckkopf verwendet, kann dieser mit Farbauftrag oder mit Farbabtrag arbeitend ausgeführt sein.

Neben dem Inkjet-Verfahren können auch Direktbedruckungsverfahren eingesetzt werden.

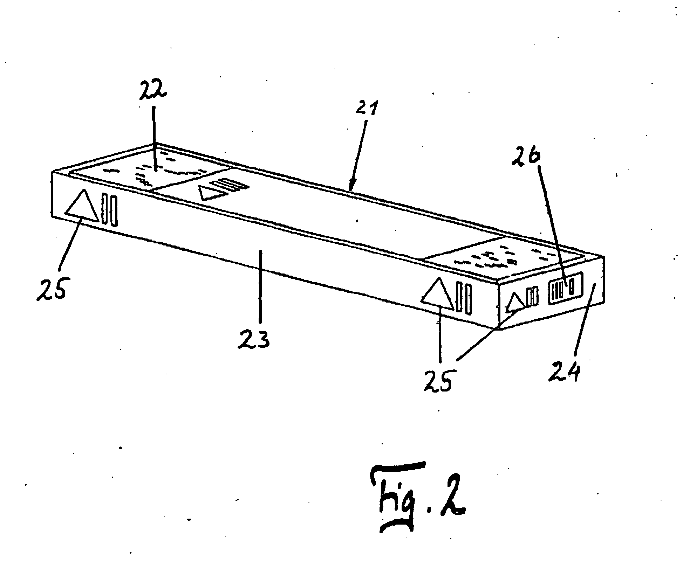

Figur 2 zeigt eine Darstellung eines beschrifteten und bedruckten Verpackungskartons 21 für Holzwerkstoffpaneele. Zu erkennen ist ein Verpackungskarton 21, der mit Holzwerkstoffpaneelen 22 bestückt ist. Sowohl an der Seitenfläche 23 als auch an der Stirnfläche 24 befinden sich kundenspezifische Aufdrucke 25 und einer Beschriftung mit einem Barcode 26, die mittels der Druckvorrichtung 1 aufgebracht worden. Um auch die Stirnflächen 24 bedrucken bzw. beschriften zu können, wurde der Verpackungskarton 21 um 90° gedreht und durch eine zweite Druckvorrichtung gefahren.

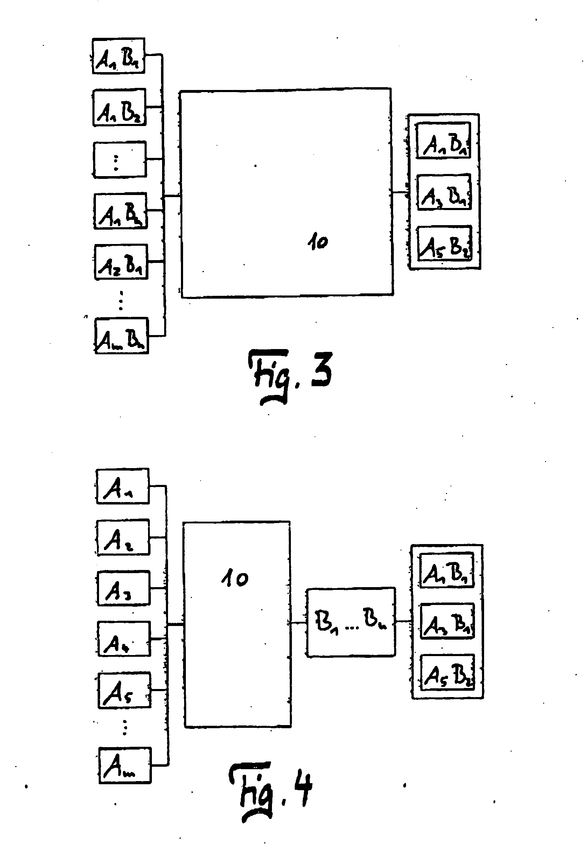

Figur 3 zeigt eine schematische Darstellung der Lagerlogistik nach dem Stand der Technik. Die Anzahl der benötigten Lagerslots ist dabei sehr groß, da jedes Produkt des Sortimentes mehrfach in den unterschiedlichen kundenspezifischen Verpackungen gelagert werden muss. Unter A wird dabei ein zu einem Gebinde zusammengefasstes spezielles Produkt des Sortimentes verstanden und B bezeichnet die unterschiedlichen kundenspezifischen Verpackungen. AᵢBᵢ bezeichnet dann in einem Gebinde zusammengefasste identische Produkte in identischen Verpackungen. Besteht das Sortiment aus m Produkten und werden n kundenspezifische Verpackungen benötigt, so müssen m mal n Lagerslots vorhanden sein, um alle Produkt- und Verpackungskombinationen vorrätig zu haben. Bei steigender Zunahme im Sortiment und bei Zunahme von kundenspezifischen Verpackungen sind hier der normalen Lagerlogistik schnell Grenzen gesetzt.

Figur 4 zeigt die schematische Darstellung der Lagerlogistik, wie sie sich nach den erfindungsgemäßen Verfahren einstellt. Die Produkte werden zunächst jeweils in neutrale (weiße) Kartons eingefüllt und produktspezifisch zu Gebinden A₁...Aₘ zusammengefasst, wobei jedes Gebinde Aᵢ identische Produkte umfasst, jedes hier dargestellte Gebinde Aₗ aber ein anderes Produkt des Sortiments umfassen soll. Diese Gebinde Aᵢ werden mittels Schrumpffolie luftdicht versiegelt und dann im Lager 10 gelagert, sodass sich die Anzahl der Lagerslots auf die Anzahl der Produkte des Sortimentes beschränkt. Erfolgt nun ein Kundenauftrag, so müssen diese neutral bestückten Verpackungskartons 5 individualisiert werden, d. h. die Verpackungskartons benötigen einen kundenspezifischen Aufdruck. Dieser Aufdruck wird dann mit der Druckvorrichtung 1 aufgebracht und der neutrale Verpackungskarton 5 wird zum kundenspezifischen Karton 21.

Die entsprechenden Gebinde Aₗ werden dann aus dem Lager 10 herausgenommen, das Gebinde Aᵢ wieder zu den einzelnen Kartons 5 aufgelöst, die dann der Druckvorrichtung 1 wie zuvor beschrieben zugeführt werden, wobei das Bedrucken auf den bereits bestückten Verpackungskartons 5 erfolgt.

Bei dieser Lagerlogistik wird die Anzahl der benötigten Slots erheblich reduziert, da nur noch das Sortiment an sich gelagert werden muss und eine redundante Lagerung wegen verschiedener kundenspezifischer Verpackungen entfällt.

Eine andere Möglichkeit der Individualisierung besteht darin, dass neutrale Verpackungskartonzuschnitte bei Erhalt eines Kundenauftrages kundenspezifisch bedruckt werden und erst dann zu einem Verpackungskarton gefaltet werden. Die Produkte des Sortimentes werden dabei nicht in neutralen Verpackungskartons im Lager gelagert, sondern entweder als lose Stückwaren oder in gebündelter Form. Holzwerkstoffpaneele beispielsweise werden auf Paletten zu Gebinden gesammelt, jedes Gebinde Aₗ mittels Schrumpffolie luftdicht versiegelt und eingelagert. Erst auf den entsprechenden Auftrag hin werden die Gebinde Aₗ aus dem Lager 10 geholt und die Paneele wieder vereinzelt. Wurde dann der Verpackungskartonzuschnitt entsprechend des Kundenauftrages kundenspezifisch bedruckt und zu einem Verpackungskarton gefaltet, werden die Verpackungskartons mit den entsprechenden Paneelen des Sortimentes bestückt und anschließend mittels Schrumpffolie luftdicht versiegelt.

Auch bei diesem Verfahren kann auf die redundante Lagerhaltung des Sortimentes verzichtet werden.

### Bezugszeichenliste

- 1: Druckvorrichtung
- 2: Transportvorrichtung
- 3: Druckkopf
- 4: Andruckrolle/Andruckwalze
- 5: Verpackungskarton
- 6: Andruckrolle/Andruckwalze
- 7: Einlaufschiene
- 9: Computer
- 10: Lager
- 21: bedruckter Verpackungskarton
- 22: Holzwerkstoffpaneele
- 23: Seitenfläche
- 24: Stirnfläche
- 25: Aufdruck
- 26: Barcode

- A: spezielles Produkt
- B: kundenspezifische Verpackung
- Aᵢ: Gebinde
- AₗBₗ: kundenspezifisches Gebinde
- T: Transportrichtung

## Patentansprüche

1. Verfahren zum Kommissionieren von Waren mit folgenden Schritten:
- Einlegen einer definierten Anzahl identischer Produkte (22) in neutrale Behälter (5) insbesondere gefaltete Kartons,
- Sammeln der neutralen Behälter (5) zu jeweils einem Gebinde (Aᵢ),
- Einlagern einer Mehrzahl von Gebinden (A₁...Aₘ) in einem Lager (10),
- Zusammenstellen der Waren in Folge eines spezifischen Auftrags durch Zusammenführung einer Mehrzahl mit den Produkten (22) befüllter neutraler Behälter (5) aus mindestens einem Gebinde (Aᵢ) zu einer Kommission,
- Beschriften und/oder Bedrucken jedes neutralen Behälters (5) der Kommission mit zu dem Auftrag gehörigen Daten, indem jeder Behälter (5) mittels einer mechanischen Transporteinrichtung (2), insbesondere einem Förderband an mindestens einer Druckvorrichtung (1) vorbeigeführt wird und
- über mindestens ein Digitaldruckwerk (3) der Druckvorrichtung (1) mindestens eine Seite des Behälters (5) beschriftet und/oder bedruckt wird, wobei
- jeder Behälter (5) vor dem Beschriften und/oder Bedrucken in eine definierte Form gebracht wird, indem bezogen auf die Transportrichtung (T) vor und hinter dem mindestens einen Digitaldruckwerk (3) beidseitig zu der Transporteinrichtung (2) mechanische Mittel (4, 6), vorzugsweise Rollen oder Walzen, angeordnet sind, die auf die Seitenwände (23) des Behälters (5) einwirken und mindestens die eine zu beschriftende und/oder bedruckende Seitenwand (23) im wesentlichen in einer vertikalen Ebene ausrichten.

2. Verfahren nach Anspruch 1, **dadurch gekennzeichnet, dass** eine Vielzahl von Gebinden (A₁...Aₘ) eingelagert wird, die aus unterschiedlichen Produkten (22) gebildet wurden, wobei aber jedes einzelne Gebinde (Aᵢ) identische Produkte umfasst.

3. Verfahren nach Anspruch 1 oder 2, **dadurch gekennzeichnet, dass** die Behälter (5) nach dem Einlegen der Produkte (22) und vor dem Einlagern verschlossen werden.

4. Verfahren nach Anspruch 1 oder 2, **dadurch gekennzeichnet, dass** das Gebinde (Aᵢ) mittels einer Folie versiegelt wird.

5. Verfahren nach einem oder mehreren der vorstehenden Ansprüche, **dadurch gekennzeichnet, dass** jeder Behälter (5) mittels einer Folie versiegelt wird.

6. Verfahren nach einem oder mehreren der vorstehenden Ansprüche, **dadurch gekennzeichnet, dass** die Behälter (5) auf sich gegenüberliegenden Seitenwänden (23) beschriftet und/oder bedruckt werden.

7. Verfahren nach einem oder mehreren der vorstehenden Ansprüche, **dadurch gekennzeichnet, dass** als Druckvorrichtung (1) mindestens ein Tintenstrahl- oder Laserdruckkopf verwendet wird.

8. Verfahren nach Anspruch 1 oder 6, **dadurch gekennzeichnet, dass** die Behälter (5) nach der Druckvorrichtung (1) bezogen auf die Transportrichtung (T) um 90° gedreht und mindestens eine zu der bereits beschrifteten und/oder bedruckten Seitenwand (23) rechtwinklig stehende Stirnwand (24) beschriftet wird.

9. Verfahren nach Anspruch 1, **dadurch gekennzeichnet, dass** als Transportvorrichtung (2) ein Vakuum-Förderband verwendet wird.

10. Verfahren nach einem oder mehreren der vorstehenden Ansprüche, **dadurch gekennzeichnet, dass** der Transport der Behälter (5) mit konstanter Geschwindigkeit und lagegenau erfolgt.

11. Verfahren nach einem oder mehreren der vorstehenden Ansprüche, **dadurch gekennzeichnet, dass** eine Vielzahl individualisierter Behälter (21) zu einer Verkaufseinheit zusammengefasst wird.

12. Verfahren nach einem oder mehreren der vorstehenden Ansprüche, **dadurch gekennzeichnet, dass** die Produkte (22) aus Holzwerkstoff sind.

13. Verfahren zum Kommissionieren von tafelförmigen Holzwerkstoffplatten (22), insbesondere Fußbodenpaneelen, **gekennzeichnet durch** folgende Schritte:
- Sammeln einer Vielzahl identischer Holzwerkstoffplatten (22) zu mindestens einem Gebinde (Aᵢ),
- Einlagern der Gebinde (Aᵢ) in einem Lager (10),
- Zusammenstellen der tafelförmigen Holzwerkstoffplatten (22) in Folge eines spezifischen Auftrags **durch** Bereitstellen einer definierten Anzahl von Gebinden (Aᵢ),
- Beschriften und/oder Bedrucken individueller Kartonzuschnitte mit für den Auftrag spezifischen Daten,
- Falten der Kartonzuschnitte zu einer Verpackung (21),
- Einlegen einer definierten Anzahl von aus den Gebinden (Aᵢ) entnommenen Holzwerkstoffplatten (22) in die Verpackung (21) und
- luftdichtes Versiegeln jeder einzelnen Verpackung (21) mittels Folie.

## Claims

1. Method for picking goods comprising the following steps:
- placing a defined number of identical products (22) in neutral containers (5), in particular folded cardboard boxes,
- assembling the neutral containers (5) to form a respective package (Aᵢ),
- placing a plurality of packages (A₁...Aₘ) in storage in a store (10),
- placing the goods together as a result of a specific order by guiding together a plurality of neutral containers (5) filled with the products (22) from at least one package (Aᵢ) to form a consignment,
- inscribing and/or printing each neutral container (5) of the consignment with data pertaining to the order, in that each container (5) is guided by means of a mechanical transporting device (2), in particular a conveyor belt, past at least one printing device (1) and
- by means of at least one digital printing mechanism (3) of the printing device (1), at least one side of the container (5) is inscribed and/or printed, wherein
- each container (5) is brought into a defined shape before the inscribing and/or printing in that mechanical means (4, 6), preferably rollers or cylinders, are arranged upstream and downstream of the at least one digital printing mechanism (3) in relation to the transporting direction (T) on either side of the transporting mechanism (2) and act on the side walls (23) of the container (5) and orientate at least one side wall (23) to be inscribed and/or printed substantially in a vertical plane.

2. Method according to claim 1, **characterised in that** a large number of packages (A₁...Aₘ), which have been formed from different products (22), are placed in storage, but each individual package (Aᵢ) comprises identical products.

3. Method according to claim 1 or 2, **characterised in that** the containers (5) are sealed after insertion of the products (22) and before being placed in storage.

4. Method according to claim 1 or 2, **characterised in that** the package (Aᵢ) is sealed by means of a film.

5. Method according to any one or more of the preceding claims, **characterised in that** each container (5) is sealed by means of a film.

6. Method according to any one or more of the preceding claims, **characterised in that** the containers (5) are inscribed and/or printed on opposing side walls (23).

7. Method according to any one or more of the preceding claims, **characterised in that** at least one inkjet or laser print head is used as the printing device (1).

8. Method according to claim 1 or 6, **characterised in that** the containers (5) downstream of the printing device (1) are rotated through 90° in relation to the transporting direction (T) and at least one end wall (24), standing at right angles to the already inscribed and/or printed side wall (23), is inscribed.

9. Method according to claim 1, **characterised in that** a vacuum conveyor belt is used as the transporting device (2).

10. Method according to any one or more of the preceding claims, **characterised in that** the containers (5) are transported at a constant speed and in a precise position.

11. Method according to any one or more of the preceding claims, **characterised in that** a large number of individualised containers (21) are combined to form a sales unit.

12. Method according to any one or more of the preceding claims, **characterised in that** the products (22) consist of wood-based material.

13. Method for picking board-shaped wood-based material panels (22), in particular floor panels, **characterised by** the following steps:
- assembling a large number of identical wood-based material panels (22) to form at least one package (Aᵢ),
- placing the packages (Aᵢ) in storage in a store (10),
- placing the board-shaped wood-based panels (22) together as a result of a specific order by providing a defined number of packages (Aᵢ),
- inscribing and/or printing individual cardboard box blanks with data specific to the order,
- folding the cardboard box blanks to form a packaging (21)
- placing a defined number of wood-based panels (22) removed from the packages (Aᵢ) into the packaging (21) and
- air-tight sealing of each individual packaging (21) by means of film.

## Revendications

1. Procédé pour commissionner des marchandises comprenant les étapes suivantes :
- on insère un nombre défini de produits identiques (22) dans des contenants neutres, en particulier des cartons pliés,
- on réunit les contenant neutres (5) en chaque fois un lot (Aᵢ),
- on entrepose plusieurs lots (A₁...Aₘ) dans une réserve (10),
- on rassemble en une commission les marchandises en conséquence d'une commande spécifique en réunissant plusieurs contenants neutres (5) remplis avec les produits (22), et issus d'au moins un lot (Aᵢ),
- on étiquette et/ou on imprime chaque contenant neutre (5) de la commission avec des informations afférentes à la commande, pour cela on fait passer chaque contenant à proximité d'au moins un dispositif d'impression (1) au moyen d'un dispositif de transport (2) mécanique, en particulier un tapis d'acheminement, et
- on étiquette et/ou imprime au moins une face du contenant (5) grâce à au moins un élément d'impression numérique (3) du dispositif d'impression (1), procédé dans lequel
- on met chaque contenant (5) dans une forme définie avant l'étiquetage et/ou l'impression, pour cela des moyens mécaniques (4, 6), de préférence des galets ou des cylindres, sont agencés de chaque côté du dispositif de transport (2) devant et derrière l'au moins un élément d'impression numérique (3) relativement à la direction de transport (T), et ces moyens mécaniques agissent sur les parois latérales (23) du contenant (5) et orientent sensiblement dans un plan vertical l'une paroi latérale (23) à étiqueter et/ou imprimer.

2. Procédé selon la revendication 1, **caractérisé en ce que** l'on entrepose plusieurs lots (A₁...Aₘ), qui ont été formés à partir de différents produits (22), chaque lot (Aᵢ) individuel regroupant cependant des produits identiques.

3. Procédé selon la revendication 1 ou 2, **caractérisé en ce que** l'on ferme les contenants (5) après insertion des produits (22) et avant l'entreposage.

4. Procédé selon la revendication 1 ou 2, **caractérisé en ce que** l'on scelle le lot (Aᵢ) au moyen d'un film.

5. Procédé selon l'une ou plusieurs des revendications précédentes, **caractérisé en ce que** l'on scelle chaque contenant (5) au moyen d'un film.

6. Procédé selon l'une ou plusieurs des revendications précédentes, **caractérisé en ce que** l'on étiquette et/ou imprime les contenants (5) sur des parois latérales (23) opposées.

7. Procédé selon l'une ou plusieurs des revendications précédentes, **caractérisé en ce que** l'on utilise en tant que dispositif d'impression (1) au moins une tête d'impression à jet d'encre ou laser.

8. Procédé selon la revendication 1 ou 6, **caractérisé en ce que**, après le dispositif d'impression (1), on tourne les contenants (5) de 90° par rapport à la direction de transport (T) et on étiquette au moins une paroi frontale (24) perpendiculaire à la paroi latérale (23) déjà étiquetée et/ou imprimée.

9. Procédé selon la revendication 1, **caractérisé en ce que** l'on utilise un tapis d'acheminement à dépression comme dispositif de transport (2).

10. Procédé selon l'une ou plusieurs des revendications précédentes, **caractérisé en ce que** le transport des contenants (5) s'effectue à vitesse constante et en position exacte.

11. Procédé selon l'une ou plusieurs des revendications précédentes, **caractérisé en ce que** l'on regroupe plusieurs contenants (21) individualisés en une unité de vente.

12. Procédé selon l'une ou plusieurs des revendications précédentes, **caractérisé en ce que** les produits (22) sont en matériau à base de bois.

13. Procédé pour commissionner des panneaux en matériau à base de bois (22) en forme de tablette, en particulier des panneaux de plancher, **caractérisé par** les étapes suivantes :
- on réunit plusieurs panneaux en matériau à base de bois (22) identiques, en au moins un lot (Aᵢ),
- on entrepose les lots (Aᵢ) dans une réserve (10),
- on rassemble les panneaux en matériau à base de bois (22) en forme de tablette en conséquence d'une commande spécifique, en mettant à disposition un nombre défini de lots (Aᵢ),
- on étiquette et/ou imprime des découpes en carton avec des informations spécifiques à la commande,
- on plie les découpes en carton en un emballage (21),
- on insère dans l'emballage (21) un nombre défini de panneaux en matériau à base de bois (22) prélevés dans les lots (Aᵢ) et
- on scelle chaque emballage individuel au moyen de film et de façon étanche à l'air.
